# EUROPÄISCHE PATENTSCHRIFT

(11) **EP 2 433 971 B1**
(45) Veröffentlichungstag und Bekanntmachung des Hinweises auf die Patenterteilung: **05.12.2012**
(21) Anmeldenummer: 10010192.2
(22) Anmeldetag: 22.09.2010
(51) Int. Cl.: C08F 14/06

(54) **Verfahren zur Herstellung eines Polyvinylchlorid (PVC) Harzes**
Method for producing a polyvinyl chloride (PVC) resin
Procédé de fabrication d'une résine de chlorure de polyvinyle (PVC)

(43) Veröffentlichungstag der Anmeldung: 28.03.2012
(73) Patentinhaber: Vinnolit GmbH & Co. KG, 85737 Ismaning (DE)
(72) Erfinder: Hiermeier, Johann, 50767 Köln (DE); Lauter, Ulrich, 84489 Burghausen (DE); Voth, Peter, 84549 Engelsber (DE)
(74) Vertreter: Forstmeyer, Dietmar

(56) Entgegenhaltungen:
- EP-A1- 0 612 766
- EP-A1- 1 710 260
- WO-A1-00/31156
- DE-A1- 2 062 130
- KR-A- 20080 018 082
- US-A- 4 456 735

## Beschreibung

Die vorliegende Erfindung betrifft ein Verfahren zur Herstellung eines PVC-Extenders (Pastenverschnittharzes).

Bei der Herstellung von Weich-PVC-Artikeln nach dem so genannten Plastisol- oder Pastenverfahren werden feinpulverige Polymerharze in flüssigen organischen Weichmachern dispergiert. Die Mischung wird Plastisol genannt. Zur Herstellung solcher Plastisole werden bevorzugt Polymerharze mit Partikelgrößen zwischen 100 nm und 2 µm verwendet, welche mittels Emulsions-, Mikrosuspensions- oder Miniemulsionsverfahren gewonnen werden. Die wichtigste Eigenschaft für die Verarbeitung solcher Plastisole ist deren Viskosität, die sogenannte Pastenviskosität. Je nach Verarbeitungstechnik oder gewünschtem Anteil an Weichmacher im hergestellten Artikel kann die Viskosität des Plastisols von dünnflüssig bis teigig variieren. Eine der Hauptanwendungen der Pastentechnologie sind Streich- und Beschichtungsverfahren, bei denen das verwendete Plastisol eine gewünschte Fließcharakteristik erfüllen soll. Meist wird hierbei eine niedrige Viskosität bei höheren Schergeschwindigkeiten angestrebt, um höhere Verarbeitungsgeschwindigkeiten oder dünnere Striche zu erlauben.

Es ist bekannt, dass die Pastenviskosität bei gleichbleibenden Gewichtsanteilen von PVC (Polyvinylchlorid) und Weichmacher durch Beimischung von größeren PVC-Partikeln abgesenkt werden kann. Insbesondere kann dadurch eine Dilatanz, d.h. ein Ansteigen der Viskosität bei höheren Scherraten, ganz oder teilweise unterdrückt werden. Hierzu eigenen sich die als Extender-PVC oder Pastenverschnittharze (engl. Blending Resin) bekannten PVC-Typen.

Extender-PVC-Harze besitzen typischerweise mittlere Korngrößen (d₅₀) von 20 bis 60 µm. Hergestellt werden sie üblicherweise, indem eine homogene Mischung aus Vinylchlorid und einem in der Regel wasserunlöslichen Initiator (ggf. bei Anwesenheit weiterer Hilfsstoffe) mittels Suspendierhilfsmittel durch starkes Rühren oder mit Hilfe eines Dispergierapparates zu Tropfen entsprechender Größe in Wasser dispergiert und stabilisiert werden, welche anschließend nach Erwärmung auf eine typische Polymerisationstemperatur auspolymerisieren. Durch Verwendung hinreichender Mengen an Suspendierhilfsmittel bleiben die Tropfen im Gegensatz zur normalen S-PVC-Polymerisation während der gesamten Polymerisationsphase stabilisiert und polymerisieren ohne weitere Koagulation oder Agglomeration individuell zum Polymerkorn aus. Die Herstellung von solchen Extendertypen ist beispielsweise in DE 1 645 668, GB 1 487 991, US 4,031,299 und EP 0 054 153 beschrieben.

Aufgrund der stark unterschiedlichen Dichte zwischen Vinylchlorid und entstehendem Polyvinylchlorid wird ein Volumenschrumpf verursacht. Hierbei entstehen Körner mit meist schrumpeligem "rosinenartigem" Aussehen. Die unregelmäßige und nicht gänzlich unporöse Struktur mit vielen Eindellungen ist typisch für die nach diesem Verfahren hergestellten Pastenverschnittharze.

Aufgabe der vorliegenden Erfindung war es, ein Verfahren zur Herstellung eines PVC Harzes (insbesondere eines Extender-PVC-Harzes) bereitzustellen, mit dessen Hilfe die Eigenschaften der Extender-PVC-Harze optimiert werden können. Es war insbesondere eine Aufgabe, ein Herstellungsverfahren für einen PVC-Extender sowie ein Extender-PVC-Harz bereitzustellen, das eine deutliche Verbesserung der viskositätsreduzierenden Wirkung in der Pastenanwendung ermöglicht. Diese Aufgaben werden durch das erfindungsgemäße Verfahren sowie das erfindungsgemäße PVC Harz gelöst.

Die vorliegende Erfindung betrifft ein Verfahren zur Herstellung von Polyvinylchlorid (PVC) bzw. einem PVC-Harz (insbesondere von Extender-PVC bzw. einem Extender-PVC-Harz) mit einer mittleren Korngröße von 10 bis 80 µm durch Polymerisation (insbesondere durch Suspensionspolymerisation) von Vinylchlorid, welches folgende Verfahrensschritte umfasst:
(a) Vorlegen von Wasser, Initiator(en), gegebenenfalls einem oder mehreren weiteren Hilfsstoffen und einem Teil des Vinylchlorids in einem Reaktor und Mischen der Bestandteile;
(b) Dispergieren und Zugabe von einem oder mehreren Suspendierhilfsmitteln unter weiterem Dispergieren;
(c) Aufheizen der Mischung;
(d) Zugabe des restlichen Vinylchlorids; und
(e) Aufarbeitung des Produkts.

Ferner betrifft die vorliegende Erfindung ein Polyvinylchlorid (PVC) bzw ein PVC-Harz (insbesondere ein Extender-PVC bzw. ein Extender PVC-Harz), das durch das erfindungsgemäße Verfahren herstellbar ist.

Vorzugsweise handelt es sich bei dem Reaktor um einen Polymerisationsautoklaven.

Vorzugsweise wird bei dem Verfahren die beschriebene Reihenfolge der Verfahrensschritte (a) bis (c) eingehalten. Aufgrund von technischen Begebenheiten kann aber auch von dieser Reihenfolge abgewichen werden und die Schritte (a) bis (c) gleichzeitig oder in anderer Reihenfolge durchgeführt werden.

Bevorzugt werden als Initiator ein oder mehrere wasserunlösliche organische Diacylperoxide, Peroxyester, Peroxodicarbonate oder Azoverbindungen verwendet.

Konkrete Beispiele für solche Initiatoren sind die folgenden Verbindungen: Diacetyl-, Didecanoyl, Acetylbenzoyl-, Dilauroyl-, Dibenzoyl-, Di-tert.-Butyl-, Diisobutyryl-, Di-(3,5,5-trimethylhexanoyl)-und Bis-2,4-dichlorobenzoylperoxid, Diisopropylpercarbonat, Di-(3-methoxybutyl)-, Di-(4-tert.-butylcyclohexyl)-, Di-sec.-butyl-, Dicetyl-, Dimyristyl- und Diethylhexylperoxodicarbonat, Cumyl-, 1,1,3,3-Tetramethylbutyl-, tert.-Amyl-, tert.-Butyl-, und 1,1-Dimethyl-3-hydroxybutylperoxyneodecanoat, tert.-Butyl- und Cumylperoxyneoheptanoat, tert.-Amyl- und tert.-Butylperoxypivalat, 2,2'-Azo(diisonitril) uznd tert.Butylhydroperoxid. Bevorzugt werden folgende Initiatoren eingesetzt: Dilauroylperoxid, Dicetyl-, Dimyristyl- und Diethylhexylperoxodicarbonat.

Bevorzugt werden als Hilfsstoffe Molekulargewichtsregler, Vernetzer, Antioxidantien, pH-Regulatoren und/oder ionische und nichtionische Tenside eingesetzt.

Als Molekulargewichtsregler können beispielsweise aliphatische Aldehyde mit 2 bis 8 Kohlenstoffatomen, Chlor- oder Bromkohlenwasserstoffe, Bromoform, Methylenchlorid sowie Mercaptane eingesetzt werden.

Des weiteren können auch Monomere mit mindestens 2 ethylenisch ungesättigten, nicht konjugierten Doppelbindungen, die im allgemeinen auch als Vernetzer bezeichnet werden, zugegen sein, wie z. B. (Meth)acrylsäureester mehrwertiger Alkohole wie z.B Ethylenglykoldimethacrylat, Propylenglykoldimethacrylat, Butylenglykolacrylat, Trimethylenglykolacrylat oder Trimethylolpropantriacrylat, ferner Vinyl- und Allylester ungesättigter C3 bis C8-Monocarbonsäuren, Mono-, Divinyl- und Diallylester von gesättigten oder ungesättigten C4 bis C10-Dicarbonsäuren, sowie Triallylcyanurat und andere Allylether polyfunktioneller Alkohole.

Bevorzugt werden als Antioxidans ein oder mehrere sterisch gehinderte Phenole eingesetzt.

Konkrete und bevorzugte Beispiele für eingesetzte Antioxidantien sind: Di-tert.-butyl-4-hydroxytoluol, Octadecyl-3-(3,5-di-tert.butyl-4-hydroxyphenyl)propionat, 2,6-Ditert.butyl-4-sec.butylphenol, Ethylenbis(oxyethylen)bis[3-(5-tert.butyl-4-hydroxy-m-tolyl)propionat] und 2,4-Dimethyl-6-(1-methylpentadecyl)phenol.

Bevorzugt werden als pH-Regulator Zitronensäure, Natriumbicarbonat und/oder ein anderes Puffersalz eingesetzt. Weiter bevorzugt wird als Hilfsstoff Natriumnitrit eingesetzt.

Weitere Beispiele für pH-Regulatoren sind Alkaliacetate, Borax, Alkaliphosphate, Alkalidihydrogenphophate, Dialkalihydrogenphosphate Alkalicarbonate, Alkylihydrogencarbonate, Ammoniak oder Ammoniumsalze von Carbonsäuren. Bevorzugt werden bei dem erfindungsgemäßen Verfahren in Schritt (a) 20 bis 80 Gew.-% des gesamten Vinylchlorids zugegeben, besonders bevorzugt 30 bis 70 Gew.-%, insbesondere 40 bis 60 Gew.-% (z.B. ca. 50 Gew.-%).

Vorzugsweise wird in Schritt (b) eine mittlere Tropfengröße von 10 - 80 µm, bevorzugt von 20 bis 60 µm, insbesondere von 20 - 40 µm eingestellt.

Unter Dispergieren versteht man im allgemeinen das Einrühren einer flüssigen Phase in eine andere, nicht mischbare, zusammenhängende, flüssige Phase, wobei sie in kleine Tropfen zerteilt wird (disperse Phase).

In Schritt (b) wird mit einem Rühnen oder einer Dispergiere oder Homogenisiervorrichtung dispergieret.

Bevorzugt werden in Schritt (b) ein oder mehrere Suspendierhilfsmittel insbesondere zur Stabilisierung der Tröpfchen zugegeben.

Suspendierhilfsmittel, auch Schutzkolloide genannt, sind im allgemeinen wasserlösliche, grenzflächenaktive, natürliche oder synthetische Polymere, die die Bildung von Tropfen der dispersen Phase unterstützen und ein Zusammenlaufen der gebildeten Tropfen verhindern.

Beispiele für Suspendierhilfsmittel sind: Gelatine, Polyvinylpyrrolidon und Copolymerisate aus Vinylacetet und Vinylpyrrolidon, wasserlösliche Cellulosederivate wie Carboxymethylcellulose, Methylcellulose, Hydroxyethylcellulose, Hydroxypropylcellulose, Hydroxypropylmethylcelluloseether, Aminocellulose, sowie Mischpolymerisate von Maleinsäure oder deren Halbester mit Styrol und Polyvinylalkohole, die noch Acetatgruppen zwischen 10 - 60 Mol-% enthalten. Besonders bevorzugt werden teilacetylierte Polyvinylalkohole, die noch 15 - 30 Mol-% Acetatgruppen enthalten und deren 4 Gew.-% wässrige Lösung bei 20 °C eine Viskosität bis 200 mPas aufweist, und wasserlösliche Celluloseether wie Hydroxypropylmethylcelluloseether, dessen 2 Gew.-% wässrige Lösung eine Viskosität von 10 bis 200 mPas (bei 20 °C) aufweist.

Bevorzugt können zusätzlich zu den Suspendierhilfsmitteln vor oder während Schritt (b) auch ein oder mehrere ionische und/oder nichtionische Tenside wie z.B. Alkansulfonate oder Sorbitanester zugegeben werden.

Beispiele für ionische Tenside sind: Alkali-, Erdalkali- oder Ammoniumsalze von Fettsäuren, wie Laurin-, Myristin-, Palmitin- oder Stearinsäure; von sauren Fettalkohol-Schwefelsäureester, von Alkansulfonsäuren, vor allem mit einer Kohlenwasserstoffkette von 10 - 18 C-Atomen, von Alkylarylsulfonsäuren, wie Dodecylbenzol- oder Dibutylnaphthalinsulfonsäure, von Sulfobernsteinsäuredialkylester, sowie Alkali- und Ammoniumsalze von epoxidierten Fettsäuren, wie Epoxystearinsäure oder epoxidiertes Sojabohnenöl, von Umsetzungsprodukten von Persäuren (z.B. Peressigsäure) mit ungesättigten Fettsäuren, wie Öl-, Linol oder Rizinolsäure. Weitere Beispiele sind: Alkylbetaine (Dodecylbetain), Alkylpyridiuniumsalze (wie Laurylpiridiniumhydrochlorid), Alkylammoniumsalze (wie Oxethyldodecylammoniumchlorid).

Beispiele für nicht ionische Tenside sind: Fettsäureester mehrwertiger Alkohole, wie Glycerinmonostearat, Sorbitanmonolaurat, -oleat oder -palmitat, sowie verschiedene Oligo- oder Polyoxyethylverbindungen wie Polyoxyethylenester von Fettalkoholen oder aromatischen Hydroxyverbindungen.

Bevorzugt werden in Schritt (d) 20 bis 80 Gew.-% des gesamten Vinylchlorids zugegeben, besonders bevorzugt 30 bis 70 Gew.-%, insbesondere 40 bis 60 Gew.-% (z. B. ca. 50 Gew.-%).

Bevorzugt erfolgt in Schritt (d) die Zugabe des restlichen Vinylchlorids von Beginn des Aufheizens bis zur Aufarbeitung. Besonders bevorzugt wird in Schritt (d) das restliche Vinylchlorid während der Polymerisationsphase mit Beginn der Aufheizphase bis zum Einsetzen des Druckabfalls zugegeben. Mit Druckabfall im allgemeinen wird der Zeitpunkt in der Polymerisationsphase bezeichnet, zu dem bei gleich bleibender Innentemperatur der Druck im Reaktor zu sinken beginnt. Dieser Zeitpunkt wird im allgemeinen bei einem Umsatz (= Verhältnis der polymerisierten VC-Menge zur Gesamt-VC-Menge) von ca. 70 % erreicht. Besonders bevorzugt wird das Vinylchlorid in der Art zudosiert, dass während dieser Zeitspanne die zugegebene Menge des restlichen Vinylchlorids mindestens der umgesetzten Menge, d. h. der Umsetzung von Monomer zum Polymer, entspricht oder diese übersteigt.

Besonders bevorzugt erfolgt die Zugabe des restlichen Vinylchlorids in Schritt (d) in einer Art und Weise, dass während der Polymerisationszeit (vom Aufheizen bis zum üblichen Druckabfall), zu jedem Zeitpunkt der Volumenschrumpf durch Zugabe des restlichen Vinylchlorids mindestens ausgeglichen wird.

Durch den Polymerisationsprozess wird ein Volumenschrumpf der dispersen Phase durch den hohen Dichteunterschied zwischen monomerem Vinylchlorid und dem wesentlich dichteren Polyvinylchlorid verursacht.

Vorzugsweise beginnt in Schritt (d) die Zugabe des restlichen Vinylchlorids mit Erreichen der Polymerisationstemperatur.

Vorzugsweise erfolgt die Zugabe des restlichen Vinylchlorids in Schritt (d) bis zu einem Druckabfall von mehr als 10% im Reaktor; insbesondere bis zu einem Druckabfall von 5%.

Wiederum bevorzugt erfolgt in Schritt (d) die Zugabe des restlichen Vinylchlorids in einer Art und Weise, dass sich das gesamte Füllvolumen im Reaktor während der Zugabe des restlichen Vinylchlorids um weniger als 10% (insbesondere um weniger als 5%) verändert.

Vorzugsweise wird in Schritt (d) das restliche Vinylchlorid über einen Zeitraum von 30 bis 600 min zugegeben.

Wiederum bevorzugt erfolgt in Schritt (d) die Zugabe des Vinylchlorids kontinuierlich oder (vorzugsweise stoßweise) in mehreren (vorzugsweise gleichen) Portionen. Bevorzugt wird die Mischung in Schritt (c) bis auf die Polymerisationstemperatur aufgeheizt; vorzugsweise auf 40 bis 80°C.

Die Ausdrücke "PVC-Extender", "Extender-PVC-Harz" und "Pastenverschnittharz" sind dem Fachmann bekannt und beispielsweise in folgenden Literaturstellen beschrieben:
1) Becker/Braun, Kunststoffhandbuch 2/1 (Polyvinylchlorid), 2. Auflage, herausgeg. v. H. K. Felger, Hanser Verlag, 1985 (Gerhard W. Becker, Dietrich Braun, Kunstoff-Handbuch: 2. Polyvinylchlorid; 1.-2. völlig neu bearb. Aufl.; München, Wien: Carl Hanser, 1985)
2) Charles E. Wilkes, James W. Summers, Charles A. Daniels (Eds.), PVC Handbook, Hanser Verlag 2005

Das erfindungsgemäß hergestellte Polyvinylchlorid (PVC) hat eine mittlere Korngröße (d₅₀, bezogen auf die volumenstatistische Auswertung) von 10 bis 80 µm. Bevorzugt hat das erfindungsgemäß hergestellte PVC eine mittlere Korngröße von 10 bis 60 µm; insbesondere von 20 bis 50 µm. Die mittlere Korngröße wird vorzugsweise nach ISO 13320:2009 bestimmt.

Im Folgenden wird das Verfahren der vorliegenden Erfindung im Detail beschrieben:
In einem Polymerisationsautoklaven werden Wasser, ein oder mehrere Initiatoren und Hilfstoffe wie Antioxdantien, pH-Regulatoren etc. vorgelegt. Anschließend wird ein Teil des zu polymerisierenden Vinylchlorids (VC) zugegeben (z. B. 20 - 80 Gew.%). Die Reihenfolge ist hierbei abhängig von den technischen Möglichkeiten der Anlage und kann beliebig gewählt werden. Als Initiator können ein oder mehrere organische Diacylperoxide, Peroxyester, Peroxodicarbonate oder ähnliche Verbindungen wie z. B. Azoverbindungen verwendet werden. Bei dem Antioxidans handelt es sich z. B. um ein sterisch gehindertes Phenol. Zur Einstellung des pH-Wertes werden eine oder mehrere Verbindungen wie z.B. Zitronensäure, Natriumbicarbonat und/oder ein anderes Puffersalz eingesetzt.

Durch Rühren mit einem konventionellen Rührer oder mit Hilfe eines Dispergier- oder Homogenisierapparates (beispielsweise einem schnelldrehenden Rührer, Rotor-Stator-System, oder einer Homogenisierpumpe mit entsprechender Lochblende oder entsprechendem Spalt) wird eine innige Vermischung der Rezepturbestandteile erreicht. Unter weiterem Dispergieren wird durch die Zugabe von einem oder mehreren Suspendierhilfsmitteln (wie z.B. einem Polyvinylalkohol, der zwischen 10 und 60 Mol-% Acetatgruppen enthält, Hydroxypropylmethylcelluloseether, Gelatine o.ä.) die Tropfengröße stabilisiert und beispielsweise eine mittlere Tropfengröße von 10 - 80 µm, vorzugsweise 20 - 40 µm, eingestellt. Gegebenenfalls können auch ein oder mehrere ionische und/oder nichtionische Tenside (z.B. Alkansulfonate, Sorbitanester) verwendet werden, um durch Absenkung der Grenzflächenspannung die Einstellung der Tropfengröße zu erleichtern. Die Polymerisation wird durch Erhitzen der Reaktionsmischung und den dadurch einsetzenden Initiatorzerfall gestartet.

Während der Heizphase kann bereits mit der Zugabe des restlichen VC begonnen werden. Vorzugsweise wird mit Erreichen der Polymerisationstemperatur die Zugabe der VC-Restmenge gestartet (20 - 80 Gew.-%). Die VC-Zugabe sollte über einen längeren Zeitraum erfolgen und vorzugsweise mit Einsetzen des üblichen Druckabfalls zum Ende der Polymerisation beendet sein. Vorzugsweise wird die VC-Zugabe so geführt, dass die Zugaberate mindestens der Umsatzrate, d. h. der Umsetzung von Monomer zum Polymer, entspricht oder diese übersteigt. Mindestens sollte jedoch mit der zusätzlichen VC-Zugabe der Volumenschrumpf als Folge des stattfindenden Umsatzes kompensiert werden. Bevorzugt geschieht dies in der Art, dass während der Polymerisationszeit zu jedem Zeitpunkt der Volumenschrumpf durch Zugabe von restlichem Vinylchlorid mindestens ausgeglichen wird. Dies kann beispielsweise durch eine Füllstandsmessung im Reaktor oder auch durch ein mathematisches Modell erfolgen, dass anhand von Versuchen entwickelt wurde. Die VC-Zugabe erfolgt bevorzugt kontinuierlich oder auch (beispielsweise stoßweise) in mehreren Portionen. Die VC-Zugabe kann durch eine entsprechende Regelungseinrichtung beispielsweise an den Innendruck und/oder an den Füllgrad des Autoklaven gekoppelt werden.

Die Polymerisation erfolgt üblicherweise isotherm. Es kann aber auch ein Verfahren gewählt werden, bei dem die Innentemperatur über den Polymerisationszeitraum variiert wird.

Die so hergestellten Polymerisate können nach bekannten Verfahren aufgearbeitet werden. Dazu wird das Polymerisat zuerst von nicht umgesetzten Monomeren befreit werden. Die weitere Aufarbeitung der wässrigen Polymerisatdispersionen zum trockenen Pulver kann ebenfalls nach bekannten Methoden erfolgen.

Üblicherweise wird dies in zwei Schritten durchgeführt: Im ersten Schritt wird, z.B. durch Dekantieren, Zentrifugieren oder Filtrieren die Hauptmenge der wässrigen Phase entfernt. Gegebenenfalls kann das Material zusätzlich durch einen Waschprozess (z.B. mit Wasser) von Polymerisationshilfsstoffen abgereichert werden, die in manchen Anwendungen negative Auswirkungen haben können. Im zweiten Schritt wird das erhaltene Feuchtgut unter Beaufschlagung mit erwärmter Luft getrocknet. Hierzu eignen sich verschiedene Trocknungsapparaturen wie z.B. Strom-, Trommel-, Wirbelbett-Trockner oder auch Kombinationen von Trocknungsapparaten.

Das erfindungsgemäße Verfahren sowie das erfindungsgemäß herstellbare PVC bzw. PVC-Harz zeichnen sich durch die folgenden Vorteile gegenüber dem Stand der Technik aus:
- Durch die nachträgliche zusätzliche VC-Zugabe werden gleichmäßiger geformte, rundere und weniger poröse PVC-Teilchen erhalten als bei kompletter VC-Vorlage.
- Wegen der geringeren VC-Menge in der Vorlage bzw. während der Homogenisier- oder Dispergierphase und während der Startphase der Polymerisation werden auch im Vergleich zum herkömmlichen Prozess (ohne Zugabe des Monomeren während der Polymerisationsphase) geringere Mengen an Polymerisationshilfsstoffen (Suspendierhilfsmittel, Tenside, etc.) pro Tonne PVC benötigt.
- Der Wasserverbrauch pro Tonne PVC wird reduziert. Infolge der sphärischen und unporösen Struktur kann bei geeigneter Rührung ein höheres Phasenverhältnis PVC/ Wasser am Ende der Polymerisation im Vergleich zum herkömmlichen Prozess erreicht werden. Eine oftmals bei der Herstellung von PVC-Suspensionspolymerisaten praktizierte Zugabe von Wasser als Schrumpfausgleich während der Polymerisation ist nicht notwendig. Der letztlich erzielte höhere Festgehalt führt zu einer Steigerung der Ausbringung pro Ansatz bzw. der Reaktorleistung sowie zu einer Verringerung der Abwassermenge, die pro Tonne PVC anfällt.
- Die sphärischen, unporösen Teilchen ermöglichen bei der mechanischen Entwässerung im Dekanter (Zentrifuge) oder einer Filtration die Abtrennung deutlich höherer Wassermengen vom Feststoff. Entsprechend weniger Energieeinsatz wird zur Trocknung durch Verdampfen des restlichen Wassers benötigt.
- Der Trocknungsprozess kann aufgrund der geringeren Oberflächen zur Adsorption von Wasser und aufgrund fehlender Porosität des PVC-Kornes in kürzerer Zeit und effizienter geführt werden. Unterstützt wird dies durch die Verringerung der spezifischen Einsatzmengen (Gewichtsanteil an eingesetztem Hilfsstoff pro hergestellter Menge Polymer), da die meisten Polymerisationshilfsmittel wie Schutzkolloide oder Tenside hydrophile oder gar hygroskopische Eigenschaften aufweisen.
- Aufgrund der sphärischen Struktur und der glatteren Oberfläche wird die Gesamtgrenzfläche zwischen Polymer und organischer Phase in einem Plastisol verringert, wodurch die Viskosität in Plastisolanwendungen deutlich stärker abgesenkt wird als mit PVC-Extendern, die nach bekannten Verfahren mit Vorlage der gesamten Menge des Vinylchlorids (vor der Aufheizphase) hergestellt wurden.

### Beispiele

Die ppm-Angabe der Polymerisationshilfsstoffe bezieht sich auf die VC-GesamtMenge.

*Bsp. 1 (Erfindungsgemäß):* In einem 4001-Autoklaven werden 150 l Wasser vorgelegt und anschließend die Polymerisationshilfsstoffe (Dilauroylperoxid 560 ppm, Diethylhexylperoxodicarbonat 310 ppm; Zitronensäure 130 ppm, Natriumnitrit 4 ppm) zugegeben. Danach werden 109 kg Vinylchlorid zugegeben und die Mischung für 10 min gerührt. Zur Stabilisierung der Tröpfchen werden dann 21,9 l einer 4 gew.-% Polyvinylalkohol-Lösung (Polyvinylkalkohol, der 22 mol-% Acetatgruppen enthält, 4450 ppm) zugegeben. Danach wird die Reaktionsmischung erhitzt (Polymerisationstemperatur = 61 °C). Mit Erreichen der Polymerisationstemperatur werden kontinuierlich 83 kg VC mit einer Rate von 21 kg/h zugegeben. Die Rate der VC-Zugabe wird so gewählt, dass mit Einsetzen des Druckabfalls die kompletten 83 kg zugegeben sind. Die Polymerisation ist beendet, wenn ein Druckabfall von 2 bar erreicht ist. Anschließend wird die übliche Aufarbeitung (Entmonomerisierung und Trocknung) durchgeführt: Die erhaltene Dispersion wird durch Anlegen von Vakuum und Einblasen von Dampf von nicht umgesetztem Monomer befreit. Der Hauptteil des Wassers wird mit Hilfe einer Zentrifuge entfernt; durch Beaufschlagung mit erwärmter Luft wird das Endprodukt getrocknet.

*Bsp. 2 (Erfindungsgemäß)*: In einem 4001-Autoklaven werden 150 l Wasser vorgelegt und anschließend die Polymerisationshilfsstoffe (Dilauroylperoxid 560 ppm, Diethylhexylperoxodicarbonat 311 ppm; Zitronensäure 110 ppm, Dinatriumhydrogenphosphat 40 ppm, Natriumnitrit 4 ppm; Natriumsalz von sek. Alkansulfonat (C12 - C17) 220 ppm) zugegeben. Danach werden 128 kg Vinylchlorid zugegeben und die Mischung für 10 min gerührt. Zur Stabilisierung der Tröpfchen werden dann 23,9 l einer 2,9 gew.-% Hydroxypropylmethylcelluloseether-Lösung (MHPC 100 = 3370 ppm, eine Hydroxypropylmethylcelluloseether, dessen 2 gew.% bei 20 °C eine Viskosität von 100 mPas aufweist) zugegeben. Danach wird die Reaktionsmischung erhitzt (Polymerisationstemperatur = 60 °C). Mit Erreichen der Polymerisationstemperatur werden kontinuierlich 77 kg Vinylchlorid mit einer Rate von 38 kg/h zugegeben. Die Rate der Vinylchlorid-Zugabe wird so gewählt, dass mit Einsetzen des Druckabfalls die kompletten 77 kg zugegeben sind. Die Polymerisation ist beendet, wenn ein Druckabfall von 2 bar erreicht ist. Anschließend wird die übliche Aufarbeitung (Entmonomerisierung und Trocknung analog Beispiel 1) durchgeführt.

*Bsp.* 3 *(Vergleichsbeispiel zu 1)*: In einem 400I-Autoklaven werden 150 l Wasser vorgelegt und anschließend die Polymerisationshilfsstoffe (Dilauroylperoxid 560 ppm, Diethylhexylperoxodicarbonat 310 ppm; Zitronensäure 220 ppm, Natriumnitrit 4 ppm) zugegeben. Danach werden 128 kg Vinylchlorid zugegeben und die Mischung für 10 min gerührt. Zur Stabilisierung der Tröpfchen werden dann 30 l einer 4 gew.-%, wässrigen Polyvinylalkohol-Lösung (Polyvinylkalkohol, der 22 mol-% Acetatgruppen enthält = 6000 ppm) zugegeben. Danach wird die Reaktionsmischung erhitzt (Polymerisationstemperatur = 61 °C). Die Polymerisation ist beendet, wenn ein Druckabfall von 2 bar erreicht ist. Anschließend wird die übliche Aufarbeitung (Entmonomerisierung und Trocknung analog Beispiel 1) durchgeführt.

*Bsp. 4 (Vergleichsbeispiel zu 2)*: In einem 4001-Autoklaven werden 150 l Wasser vorgelegt und anschließend die Polymerisationshilfsstoffe (Dilauroylperoxid 570 ppm, Dicetylperoxodicarbonat 610 ppm; Zitronensäure 160 ppm, Dinatriumhydrogenphosphat 80 ppm, Natriumnitrit 5 ppm; Sorbitanmonolaurat 1500 ppm) zugegeben. Danach werden 128 kg Vinylchlorid chargiert und die Mischung für 10 min gerührt. Zur Stabilisierung der Tröpfchen werden dann 30 l einer Hydroxypropylmethylcelluloseether-Lösung (MHPC 100 = 5400 ppm) zugegeben. Danach wird die Reaktionsmischung erhitzt (Polymerisationstemperatur = 60 °C). Die Polymerisation ist beendet, wenn ein Druckabfall von 2 bar erreicht ist. Anschließend wird die übliche Aufarbeitung (Entmonomerisierung und Trocknung analog Beispiel 1) durchgeführt.

In den folgenden Tabellen 1 und 2 sind Analysedaten der Beispiele aufgeführt.

**Tabelle 1:**

| | *Bsp. 1* | *Bsp. 3* | *Bsp. 2* | *Bsp. 4* |
|---|---|---|---|---|
| K-Wert | 63,5 | 63,5 | 63,8 | 64,0 |
| mittlerer Korndurchmesser [µm] * | 30 | 26 | 34 | 37 |
| Schüttdichte [g/l] | 639 | 568 | 631 | 565 |
| Weichmacheraufnahme [%] | 5,1 | 8,5 | 6,5 | 8,5 |
| Restfeuchte nach Dekanter [%] | 21,9 | 23,9 | 19,6 | 25,0 |
| Kornverteilung * | | | | |
| Vol-% > 10 µm | 94 | 91 | 91 | 100 |
| Vol-% > 20 µm | 80 | 69 | 80 | 94 |
| Vol-% > 45 µm | 16 | 2 | 18 | 38 |
| Vol-% > 63 µm | 0 | 0 | 0 | 10 |
| Rieseltest über R25 [s] | 1,8 | 2,8 | 2,3 | 4,5 |

| | | | | |
|---|---|---|---|---|
| * Messmethode: Beckmann Coulter LS13320; mittlerer Korndurchmesser d₅₀ (volumengemittelt) | | | | |

**Tabelle 2:**

| | *Rezeptur A* | | *Rezeptur B* | |
|---|---|---|---|---|
| Pastenviskosität [Pas] bei | *Bsp. 1* | *Bsp. 3* | *Bsp. 1* | *Bsp.* 3 |
| 1 s⁻¹ | 1,5 | 1,9 | 1,6 | 2,2 |
| 10 s⁻¹ | 1,37 | 1,69 | 1,89 | 2,74 |
| 100 s⁻¹ | 1,73 | 2,0 | 2,74 | 4,12 |
| 1000 s⁻¹ | 1,85 | 2,11 | 2,42 | 3,3 |

| | | | | |
|---|---|---|---|---|
| *Rezeptur A*: 50 phr Mikrosuspensions-PVC K-Wert 80, 50 phr Extender, 45 phr Butylbenzylphthalat/ Texanolisobutyrat, *Rezeptur B*: 50 phr Mikrosuspensions-PVC K-Wert 70, 50 phr Extender, 50 phr Diisononylphthalat | | | | |

## Patentansprüche

1. Verfahren zur Herstellung von Polyvinylchlorid (PVC) mit einer mittleren Korngröße von 10 bis 80 µm durch Suspensionspolymerisation von Vinylchlorid, **dadurch gekennzeichnet, dass** es folgende Verfahrensschritte umfasst:
(a) Vorlegen von Wasser, Initiator(en), gegebenenfalls einem oder mehreren weiteren Hilfsstoffen und einem Teil des Vinylchlorids in einem Reaktor und Mischen der Bestandteile;
(b) Dispergieren und Zugabe von einem oder mehreren Suspendierhilfsmitteln unter weiterem Dispergieren;
(c) Aufheizen der Mischung;
(d) Zugabe des restlichen Vinylchlorids; und
(e) Aufarbeitung des Produkts.

2. Verfahren nach Anspruch 1, **dadurch gekennzeichnet, dass** es sich bei dem Hilfsstoff um ein Antioxidans, ein ionisches und/ oder nicht ionisches Tensid, einen Molekülgrößenregler, ein Vernetzer und/oder einen pH-Regulator handelt.

3. Verfahren nach einem der vorhergehenden Ansprüche, **dadurch gekennzeichnet, dass** als Initiator ein organisches Diacylperoxid, ein Peroxyester, ein Peroxodicarbonat, eine Azoverbindung oder eine Kombination aus den aufgeführten Substanzklassen verwendet wird.

4. Verfahren nach einem der vorhergehenden Ansprüche, **dadurch gekennzeichnet, dass** in Schritt (a) 20 bis 80 Gew.-% des gesamten Vinylchlorids zugegeben werden.

5. Verfahren nach einem der vorhergehenden Ansprüche, **dadurch gekennzeichnet, dass** in Schritt (b) mit einem Rührer oder einer Dispergier- oder Homogenisiervorrichtung dispergiert wird.

6. Verfahren nach einem der vorhergehenden Ansprüche, **dadurch gekennzeichnet, dass** als Suspendierhilfsmittel ein oder mehrere Polyvinylalkohole, Celluloseether und/oder Gelatine zugegeben werden.

7. Verfahren nach einem der vorhergehenden Ansprüche, **dadurch gekennzeichnet, dass** vor oder während Schritt (b) ein ionisches und/oder nichtionisches Tensid zugegeben wird.

8. Verfahren nach einem der vorhergehenden Ansprüche, **dadurch gekennzeichnet, dass** die Verfahrensschritte (a) bis (c) in der angegebenen Reihenfolge, gleichzeitig oder auch in anderer Reihenfolge durchgeführt werden.

9. Verfahren nach einem der vorhergehenden Ansprüche, **dadurch gekennzeichnet, dass** in Schritt (d) 80 bis 20 Gew.-% des gesamten Vinylchlorids zugegeben werden.

10. Verfahren nach einem der vorhergehenden Ansprüche, **dadurch gekennzeichnet, dass** in Schritt (d) die Zugabe des restlichen Vinylchlorids zwischen Beginn des Aufheizens und Beginn der Aufarbeitung erfolgt.

11. Verfahren nach einem der vorhergehenden Ansprüche, **dadurch gekennzeichnet, dass** in Schritt (d) die Zugabe des restlichen Vinylchlorids mit Erreichen der Polymerisationstemperatur beginnt.

12. Verfahren nach einem der vorhergehenden Ansprüche, **dadurch gekennzeichnet, dass** in Schritt (d) die Zugabe des restlichen Vinylchlorids bei einem Druckabfall von mehr als 5 % im Reaktor beendet wird.

13. Verfahren nach einem der vorhergehenden Ansprüche, **dadurch gekennzeichnet, dass** in Schritt (d) die Zugabe des restlichen Vinylchlorids in der Art erfolgt, dass sich das Füllvolumen im Reaktor (vorzugsweise zu jeder Zeit) um weniger als 10% verändert.

14. Verfahren nach einem der vorhergehenden Ansprüche, **dadurch gekennzeichnet, dass** bei Schritt (d) die Zugabe des Vinylchlorids kontinuierlich oder in mehreren (bevorzugt gleichen) Portionen erfolgt.

15. Polyvinylchlorid (PVC), herstellbar durch ein Verfahren nach einem der vorhergehenden Ansprüche.

## Claims

1. Process for the production of polyvinyl chloride (PVC) having a median grain size of from 10 to 80 µm by suspension polymerization of vinyl chloride, **characterized in that** the process comprises the following process steps:
(a) introduction of water, initiator(s), optionally one or more further adjuvants, and some of the vinyl chloride into a reactor as initial charge and mixing of the constituents;
(b) dispersion, and addition of one or more suspension auxiliaries with continued dispersion;
(c) heating of the mixture;
(d) addition of the remaining vinyl chloride; and
(e) working-up of the product.

2. Process according to claim 1, **characterized in that** the auxiliary is an anti-oxidant, an ionic and/or non-ionic surfactant, a molecule size regulator, a cross-linker and/or a pH regulator.

3. Process according to either one of the preceding claims, **characterized in that** as initiator there is used an organic diacyl peroxide, a peroxy ester, a peroxodicarbonate, an azo compound or a combination of the above substance classes.

4. Process according to any one of the preceding claims, **characterized in that** in step (a) from 20 to 80 % by weight of the total vinyl chloride are added.

5. Process according to any one of the preceding claims, **characterized in that** in step (b) dispersion is effected using a stirring device or a dispersing or homogenizing device.

6. Process according to any one of the preceding claims, **characterized in that** as suspension auxiliaries there are added one or more polyvinyl alcohols, cellulose ethers and/or gelatin.

7. Process according to any one of the preceding claims, **characterized in that** before or during step (b) an ionic and/or non-ionic surfactant is added.

8. Process according to any one of the preceding claims, **characterized in that** process steps (a) to (c) are carried out in the order indicated, simultaneously or in some other order.

9. Process according to any one of the preceding claims, **characterized in that** in step (d) from 80 to 20 % by weight of the total vinyl chloride are added.

10. Process according to any one of the preceding claims, **characterized in that** in step (d) the addition of the remaining vinyl chloride is effected from the beginning of the heating to the beginning of the working-up.

11. Process according to any one of the preceding claims, **characterized in that** in step (d) the addition of the remaining vinyl chloride begins once the polymerization temperature has been reached.

12. Process according to any one of the preceding claims, **characterized in that** in step (d) the addition of the remaining vinyl chloride is terminated in the event of a pressure drop of more than 5 % in the container.

13. Process according to any one of the preceding claims, **characterized in that** in step (d) the addition of the remaining vinyl chloride is effected in such a way that the fill volume in the container (preferably at all times) changes by less than 10 %.

14. Process according to any one of the preceding claims, **characterized in that** in step (d) the addition of the vinyl chloride is effected continuously or in a plurality of (preferably equal) portions.

15. Polyvinyl chloride (PVC) that can be produced by a process according to any one of the preceding claims.

## Revendications

1. Procédé de fabrication de chlorure de polyvinyle (PVC), possédant une taille granulaire moyenne de 10 à 80 µm, par une polymérisation en suspension de chlorure de vinyle, **caractérisé en ce qu'**il comprend les étapes de procédé suivantes :
(a) mise en place d'eau, d'initiateur(s), éventuellement d'un ou de plusieurs produits auxiliaires et d'une partie du chlorure de vinyle dans un réacteur et mélange des composants ;
(b) dispersion et ajout d'un ou de plusieurs agents de suspension en poursuivant la dispersion ;
(c) chauffage du mélange ;
(d) ajout du chlorure de vinyle restant ; et
(e) finition du traitement du produit.

2. Procédé selon la revendication 1 **caractérisé en ce qu'**en tant que produit auxiliaire, il s'agit d'un antioxydant, d'un tensioactif ionique et/ou non ionique, d'un régulateur de taille moléculaire, d'un agent mouillant et/ou d'un régulateur de pH.

3. Procédé selon l'une des revendications précédentes **caractérisé en ce qu'**en tant qu'initiateur on emploie un diacylperoxyde organique, un peroxyester, un peroxydicarbonate, un composé azoïque ou une combinaison des types de substances citées.

4. Procédé selon l'une des revendications précédentes **caractérisé en ce que** dans l'étape (a), de 20 à 80 % en poids du chlorure de vinyle total sont ajoutés.

5. Procédé selon l'une des revendications précédentes **caractérisé en ce que** dans l'étape (b), la dispersion est effectuée avec un agitateur ou un dispositif de dispersion ou d'homogénéisation.

6. Procédé selon l'une des revendications précédentes **caractérisé en ce qu'**en tant que produit auxiliaire pour la suspension, un ou plusieurs alcools polyvinyliques, de l'éther de cellulose et/ou de la gélatine sont ajoutés.

7. Procédé selon l'une des revendications précédentes **caractérisé en ce qu'**avant ou pendant l'étape (b), un tensioactif ionique et/ou non ionique est ajouté.

8. Procédé selon l'une des revendications précédentes **caractérisé en ce que** les étapes (a) à (c) du procédé sont exécutées dans l'ordre indiqué, simultanément ou également dans un autre ordre.

9. Procédé selon l'une des revendications précédentes **caractérisé en ce que** dans l'étape (d), de 80 à 20 % en poids du chlorure de vinyle total sont ajoutés.

10. Procédé selon l'une des revendications précédentes **caractérisé en ce que** dans l'étape (d), l'ajout du chlorure de vinyle restant est effectué entre le début du chauffage et le début de la finition du traitement.

11. Procédé selon l'une des revendications précédentes **caractérisé en ce que** dans l'étape (d), l'ajout du chlorure de vinyle restant commence lorsque la température de polymérisation est atteinte.

12. Procédé selon l'une des revendications précédentes **caractérisé en ce que** dans l'étape (d) l'ajout du chlorure de vinyle restant est terminé pour une chute de pression de plus de 5 % dans le réacteur.

13. Procédé selon l'une des revendications précédentes **caractérisé en ce que** dans l'étape (d) l'ajout du chlorure de vinyle restant s'effectue de manière à ce que le volume de remplissage du réacteur (de préférence à n'importe quel moment) varie de moins de 10 %.

14. Procédé selon l'une des revendications précédentes **caractérisé en ce que** dans l'étape (d) l'ajout du chlorure de vinyle est effectué en continu ou en plusieurs portions (de préférence égales).

15. Chlorure de polyvinyle (PVC) pouvant être fabriqué par un procédé selon l'une des revendications précédentes.
